# EUROPÄISCHE PATENTSCHRIFT

(11) **EP 0 814 673 B1**
(45) Veröffentlichungstag und Bekanntmachung des Hinweises auf die Patenterteilung: **13.06.2001**
(21) Anmeldenummer: 96904098.9
(22) Anmeldetag: 04.03.1996
(51) Int. Cl.: A23L 1/318, A22C 11/00, A22C 17/00, A23B 4/16, A23B 4/08, A23B 4/06

(54) **VERFAHREN UND VORRICHTUNG ZUR REIFEBEHANDLUNG VON LEBENSMITTELCHARGEN**
PROCESS AND DEVICE FOR MATURING FOODSTUFF BATCHES
PROCEDE ET DISPOSITIF DE MATURATION DE LOTS DE DENREES ALIMENTAIRES

(30) Priorität: 04.03.1995 DE 19507578
(43) Veröffentlichungstag der Anmeldung: 07.01.1998
(73) Patentinhaber: H. Kemper GmbH & Co., 49638 Nortrup (DE)
(72) Erfinder: LEDERMANN, Ernst, CH-8952 Schlieren (CH); KÜHNL, Andreas, D-49638 Nortrup (DE)
(74) Vertreter: Eisenführ, Speiser & Partner
(86) Internationale Anmeldenummer: EP9600894
(87) Internationale Veröffentlichungsnummer: WO9627299

(56) Entgegenhaltungen:
- EP-A- 0 667 102
- DE-A- 2 203 753
- DE-A- 3 137 506
- GB-A- 855 108
- GB-A- 2 248 010
- US-A- 4 108 056
- DATABASE WPI Week 7410 Derwent Publications Ltd., London, GB; AN 74-18895 XP002002532 & SU,A,368 845 (GUARI N.G. ET AL)
- DATABASE WPI Week 8604 Derwent Publications Ltd., London, GB; AN 86-021512 XP002002533 & DD,A,227 606 (VEB SCHLACHT VERARB)
- DATABASE WPI Week 8843 Derwent Publications Ltd., London, GB; AN 88-305606 XP002002534 & SU,A,1 387 950 (SVIRIDOV A. I.)

## Beschreibung

Die vorliegende Erfindung bezieht sich auf ein Verfahren zur Reifebehandlung von Chargen insbesondere aus einer oder mehreren Rohwürsten, bei dem die Chargen in eine Behandlungskammer gegeben und nach einer vorgebbaren Behandlungsdauer aus der Behandlungskammer wieder entfernt werden. Die Erfindung bezieht sich weiterhin auf eine Vorrichtung zur Ausführung eines derartigen Verfahrens, die mindestens eine Behandlungskammer und eine erste Fördereinrichtung zur Beförderung der Chargen zu der oder zu einer vorgebbaren Behandlungskammer aufweist.

Der Begriff "Charge" umfaßt dabei eine Gruppe von Produkten, die unter den selben Bedingungen zeitgleich behandelt werden.

Die Herstellung verschiedener Lebensmittel wie beispielsweise Wurst und Käse erfordern eine Reifebehandlung, bei der die Lebensmittel für eine vorbestimmte Zeitdauer bestimmten Temperaturen und Luftfeuchtigkeiten ausgesetzt werden. Zur Herstellung einer schnittfesten Rohwurst wird zunächst in einem Kutter das Rohmaterial - beispielsweise ein Drittel Rindfleisch, ein Drittel Schweinefleisch und ein Drittel Speck - mit weiteren Zusätzen zerkleinert und gemischt. Die gekutterte Masse wird portionsweise in Därme abgefüllt und dann der Reifebehandlung unterworfen.

Bei den Reifeverfahren ist die Naturreifung ohne technische Hilfsmittel weitestgehend von der Klimareifung abgelöst worden, bei der die Temperatur, relative Luftfeuchtigkeit und Luftbewegung gesteuert werden. Hierdurch kann beispielsweise Rohwurst unabhängig vom Klima das ganze Jahr über hergestellt werden. In modernen Reifungsanlagen läßt sich eine programmierte Reifung mit genauer zeitlicher Einstellung sämtlicher Reifungsabläufe durchführen.

Die Reifung der Rohwurst kann hierbei sowohl als Schnell- als auch als Langsamverfahren durchgeführt werden: Bei der Schnellreifung wird im Temperaturbereich von 22°C bis 26°C gearbeitet und die relative Luftfeuchtigkeit im Verlauf der Reifung in mehreren Schritten von 95 % auf 75 % gesenkt. Schnell gereifte Rohwürste sind in der Regel in spätestens 10 Tagen schnittfest und verkaufsfertig.
Bei einer Langsamreifung bei relativ niedrigen Temperaturen, im allgemeinen unter 15°C, verläuft der Reifungsprozeß langsamer. Die Herstellungszeit wird hierdurch verlängert. Auch bei der Langsamreifung beträgt die relative Luftfeuchtigkeit zu Beginn bis zu ca. 95 % und wird im Verlauf der Reifung und Lagerung auf 75 bis 65 % gesenkt. Die Reduzierung der relativen Luftfeuchtigkeit erfolgt langsamer als bei der Schnellreifung. Langsam gereifte Rohwürste haben im allgemeinen einen besseren Geschmack, eine dunklere Farbe und eine bessere Farbhaltung.

Ebenfalls bekannt ist eine Reifebehandlung bei mittleren Temperaturen von 15°C bis 20°C, um hierdurch einen Kompromiß zwischen Vor- und Nachteilen der Langsam- bzw. Schnellreifung zu erzielen.

Eine in der Praxis bekannte Vorrichtung zur Reifebehandlung von Rohwurstchargen enthält eine oder mehrere Behandlungskammern, in die auf Transportwagen befindliche Rohwürste eingeschoben und nach vorbestimmter Zeitdauer wieder herausgezogen werden können. Einzelne Rohwurstchargen werden im allgemeinen an jeweils einem Transportwagen eingehängt. Mehrere Transportwagen können miteinander gekoppelt und sequentiell einzeln oder gruppenweise in eine Behandlungskammer hineingefahren und nach vorbestimmter Zeitdauer wieder herausgefahren werden. Die Verweildauer der Transportwagen in den Behandlungskammern ist dabei abhängig von der Rezeptur und dem Kaliber der Würste der am Wagen eingehängten Charge sowie dem Behandlungsklima in der Behandlungskammer. Bei dieser bekannten Vorrichtung wird daher eine Behandlungskammer - und damit der gesamte nachfolgende Arbeitsablauf - so lange blockiert, bis die in der Behandlungskammer befindliche Chargen ausreichend gereift sind und aus der Behandlungskammer herausgefahren werden können, um Platz für die nächste Charge zu schaffen. Insbesondere Chargen mit langer Reifungszeit blockieren daher den vor- und nachgelagerten Arbeitsablauf entsprechend lange. Auch ist für einen effizienten Betrieb der Behandlungskammern ein hoher Füllgrad erforderlich, für den die Behandlungskammern mit Chargen von Produkten gleicher Behandlungserfordernisse möglichst vollständig gefüllt sein müssen. Chargen mit kürzerer Reifungszeit können im betrieblichen Regelfall auch nicht mit Chargen längerer Reifezeit gemeinsam in einer Behandlungskammer behandelt werden, so daß der erwünschte Füllgrad nicht mit derart unterschiedlichen Chargen zu erreichen ist. Deshalb können verhältnismäßig kleine Produktmengen nicht mehr rationell hergestellt werden, wenn man nicht hierfür gesonderte kleine Behandlungskammern einsetzt.

Aus der DE-A-31 37 506 geht ein Verfahren sowie eine Vorrichtung zum kontinuierlichen Füllen und Wärmebehandlen von Lebensmittelmassen, insbesondere Fleischmassen hervor. Hierbei werden diese Fleischmassen mittels verschiedener Fördereinrichtungen zu verschiedenen Behandlungsstationen gefördert, die hintereinander angeordnet sind. Die Fleischmassen kehren am Ende der Behandlung nicht mittels der Fördereinrichtungen an ihren Ausgangspunkt zurück.

Auch innerhalb der einzelnen Behandlungsstationen werden die Fleischmassen lediglich in eine Richtung gefördert. So wird beispielsweise in der DE-A-31 37 506 hinsichtlich der Behandlungsstation "Kochschrank" ausgeführt, daß die die Fleischmassen aufnehmenden Formen von einer, in Förderrichtung der Formen betrachtet, vor dem Kochschrank angeordneten Einrichtung in den Kochschrank eingebracht werden und diesen in einer vorgegebenen Zeit durchlaufen. Weiterhin wird dort dargelegt, daß die Formen nach dem Verlassen des Kochschranks mittels einer Einrichtung in den in Förderrichtung hinter dem Kochschrank angeordneten Vorkühlschrank eingebracht werden

Aus der SU-A-368 845 geht eine Kühlkammer hervor, innerhalb der eine Fördereinrichtung meanderförmig geführt ist, an der einzelne, um 180° kipp- bzw. verschwenkbare, oben offene Trogbehälter angebracht sind. Die in dem Kühlraum zu behandelnden Lebensmittel werden von einer Beschickungsstation aus, in der die Lebensmittel an die Trogbehälter übergeben werden, mittels der Trogbehälter entlang der Fördereinrichtung zu einer Entladestation transportiert. Zum Austragen der Lebensmittel werden in der Entladestation die einzelnen Trogbehälter um 180° so verschwenkt, daß die in dem Trogbehälter befindlichen Lebensmittel nach unten herausfallen können. Anschließend werden die Trogbehälter in dieser verschwenkten Stellung mittels der Fördereinrichtung von der Entladestation zu der Beschickungsstation transportiert. Ein Transport von Lebensmitteln von der Entladestation zu der Beschickungsstation ist ausgeschlossen, da die Lebensmittel zwischen der Entlade- und der Beschickungsstation aus den Trogbehältern herausfallen würden.

Die vorstehenden Ausführungen treffen auch auf die SU-A-1 387 950 und US-A-4,108,056 zu. Sowohl die SU-A-13 87 950 als auch die US-A-4,108,056 zeigen einen Behandlungsraum, bei denen die zu behandelnden Lebensmittel nur von einer Eingangsseite linear zu einer Ausgangseite hindurchgeführt werden.

Die DD-A-227 606 betrifft lediglich ein Verfahren zum Behandlen von Wurstrohmassen mit Schimmelpilzkulturen, wobei die Erwähnung eines Fördersystems nicht erfolgt.

Die Aufgabe der vorliegenden Erfindung besteht daher darin, ein Verfahren und eine Vorrichtung zur Reifebehandlung insbesondere von Rohwurst anzugeben, die eine effiziente Reifebehandlung gestatten.

Diese Aufgabe wird bei einem Verfahren der eingangs genannten Art erfindungsgemäß dadurch gelöst, daß die Chargen innerhalb der Behandlungskammer während vorgebbarer Zeitabschnitte der Behandlungsdauer kontinuierlich längs einer geschlossenen Förderbahn bewegt werden.

Die Vorteile des erfindungsgemäßen Verfahrens bestehen in erster Linie darin, daß die Bewegung der Chargen innerhalb der Behandlungskammer längs einer geschlossenen Förderbahn einen leichten Einzelzugriff auf jede einzelne Charge gestattet. Hierdurch können einzelne Chargen zu beliebig vorgebbaren Zeitpunkten aus der Behandlungskammer herausgeführt und entsprechend neue Chargen hineingeführt werden. Eine Blockierung der Behandlungskammer durch eine einzelne Charge lang reifender Rohwürste wird hierbei vermieden. Der Einzelzugriff auf die Chargen führt zu einer gegenüber bekannten Verfahren hohen Flexibilität, so daß auch bei einer einzigen großen Behandlungskammer unterschiedlichen Behandlungszeit-Anforderungen genügt werden kann. Schließlich können bei dem erfindungsgemäßen Verfahren auch mehrere Behandlungskammern mit unterschiedlichen Temperaturen und Luftfeuchtigkeiten vorgesehen werden und die Chargen - je nach spezifischer Erfordernis - sukzessive verschiedenen Klimabedingungen ausgesetzt werden.

Ein weiterer Vorteil des erfindungsgemäßen Verfahrens besteht darin, daß durch die Bewegung der Chargen eine weitere Homogenisierung des Klimas innerhalb der Behandlungskammer erreicht wird: Durch die Bewegung der Chargen wird eine Luftbewegung innerhalb der Behandlungskammer induziert, die zu einer besseren Durchmischung der Luft und damit zu einer weiteren Homogenisierung des Behandlungsklimas beiträgt. Sind Temperatur und Feuchtigkeit innerhalb der Behandlungskammer gleichwohl noch nicht völlig homogen, so führt die Bewegung der Chargen innerhalb der Behandlungskammer doch zumindest zu einem "Durchwandern" der unterschiedlichen "Klimazonen" und eventueller Schattenbereiche. Gegenüber bekannten Reifeverfahren ermöglicht das erfindungsgemäße Verfahren schließlich auch eine erhebliche Energieeinsparung, da der Raum innerhalb einer Behandlungskammer wegen der Befüllmöglichkeit mit unterschiedlichsten Chargen besser ausgenutzt werden kann.

Das erfindungsgemäße Verfahren löst die gestellte Aufgabe unabhängig davon gleichermaßen gut, ob eine einzelne Charge aus einer großen oder kleinen Menge von Lebensmitteln besteht. Das erfindungsgemäße Verfahren ist zur Reifebehandlung von Rohwürsten vorteilhaft; ebenfalls vorteilhaft wird es jedoch auch bei der Reifebehandlung anderer Lebensmittel angewandt. Eine Charge kann beispielsweise also auch aus Brüh- und Kochwürsten bestehen, deren Behandlung eine Erhitzung einschließt.

Vorteilhafterweise werden die Chargen während der gesamten Behandlungsdauer kontinuierlich längs der geschlossenen Förderbahn bewegt, um die Homogenität der Behandlung zu optimieren.

Die Chargen werden in der Behandlungskammer bevorzugt mit konstanter, niedriger Geschwindigkeit bewegt. Es gibt jedoch durchaus Fälle, in denen verschiedene Geschwindigkeitsstufen vorteilhaft sind. Um zur Entnahme einzelner Chargen innerhalb der Behandlungskammer einen schnellen Zugriff zu ermöglichen, kann die Fördergeschwindigkeit in solchen Fällen kurzfristig erhöht und die Förderung beim Erreichen der Entnahmeposition unterbrochen werden.

Bei einem Verfahren, bei dem die Chargen mit einer ersten Fördereinrichtung zu einer Behandlungskammer gefördert werden, werden die Chargen an der Behandlungskammer von einer Übergabeeinrichtung von der ersten Fördereinrichtung abgenommen und einer zweiten Fördereinrichtung übergeben, die innerhalb der Behandlungskammer die Chargen längs der geschlossenen Förderbahn bewegt. Durch die Förderung mittels getrennter Fördereinrichtungen - einerseits von und zur Behandlungskammer, andererseits innerhalb der Behandlungskammer - und der Übergabe zwischen diesen Fördereinrichtungen wird eine Flexibilität erreicht, die unterschiedliche Behandlungszeit-Anforderungen einzelner Chargen selbst innerhalb derselben Behandlungskammer ermöglicht.

Gemäß einer vorteilhaften Ausführungsform der Erfindung werden die Chargen innerhalb der Behandlungskammer längs einer solchen Förderbahn bewegt, welche in einer vertikalen Ebene liegt. Besonders bevorzugt ist hierbei die Fördereinrichtung innerhalb der Behandlungskammer nach Art eines Paternosters ausgebildet. Hierdurch wird einerseits der zur Verfügung stehende Raum innerhalb der Behandlungskammer vollständig für zu behandelnde Chargen genutzt; andererseits erleichtert eine solche Förderbahn auch die Entnahme einzelner Chargen aus der Behandlungskammer oder das Einfügen neuer Chargen in die Fördereinrichtung der Behandlungskammer. Der Zugriff auf die Chargen in der Behandlungskammer kann erfolgen, ohne daß die Fördereinrichtung anhält; es ist jedoch ebenfalls vorteilhaft, zur Entnahme und Einfügung von Chargen die Fördereinrichtung innerhalb der Behandlungskammer anzuhalten und in definierten Übergabepositionen eine Entnahme oder Einfügung neuer Chargen durchzuführen.

Zur Erleichterung der Handhabung der Chargen werden besonders bevorzugt die zu behandelnden Lebensmittel einer Charge - insbesondere also die Rohwürste - auf rostartige Kassetten gelegt, die während der Behandlungsdauer dann längs der geschlossenen Förderbahn in der Behandlungskammer bewegt werden. Die Kassetten enthalten Aufnahme- oder Befestigungseinrichtungen, mit denen sie an den Fördereinrichtungen befestigt werden können. Die Handhabung standardisierter, in der Praxis relativ kleiner Kassetten mit aufgelegten Rohwürsten ist erheblich einfacher als die Handhabung der üblichen Transportwagen und natürlich auch einfacher als die Rohwürste womöglich unterschiedlicher Größe einzeln von einer zur nächsten Fördereinrichtung zu übergeben. Es kann vorteilhaft sein, die Rohwürste einer Charge während der Behandlungsdauer auf der Kassette mindestens einmal zu wenden, um insbesondere dann die Gleichmäßigkeit der Reifung weiter zu fördern.

Die Aufgabe der vorliegenden Erfindung wird bei einer Vorrichtung der eingangs genannten Art, insbesondere zur Ausführung des zuvor beschriebenen Verfahrens, erfindungsgemäß auch gelöst durch mindestens eine zweite Fördereinrichtung zur Beförderung der Chargen längs einer geschlossenen Förderbahn innerhalb einer Behandlungskammer und eine Übergabeeinrichtung zwischen jeder zweiten Fördereinrichtung und der ersten Fördereinrichtung, mittels derer die Chargen von der ersten Fördereinrichtung zur zugehörigen zweiten Fördereinrichtung oder zurück übergeben werden können.

Die Vorteile der erfindungsgemäßen Vorrichtung bestehen in erster Linie in einer wesentlich besseren Ausnutzung der mindestens einen Behandlungskammer. Zum einen kann durch die zweite Fördereinrichtung der Raum innerhalb jeder Behandlungskammer besser genutzt werden, zum anderen kann mit größerer Flexibilität auf die Chargen innerhalb der Behandlungskammer - je nach individueller Behandlungszeit-Anforderung - zugegriffen werden.

Besonders vorteilhaft ist eine Vorrichtung mit einer Vielzahl von Behandlungskammern, innerhalb derer jeweils mindestens eine zweite Fördereinrichtung angeordnet ist. Hierdurch können entweder Chargen wahlweise in einer der Behandlungskammern mit jeweils gleicher Temperatur und Luftfeuchtigkeit behandelt werden; besonders bevorzugt haben jedoch verschiedene Behandlungskammern unterschiedliche Temperaturen oder Luftfeuchtigkeit, um je nach Reifestadium der zu behandelnden Chargen entsprechende Klimabedingungen innerhalb der jeweiligen Behandlungskammer zur Verfügung stellen zu können. Eine besonders bevorzugte Ausführungsform der erfindungsgemäßen Vorrichtung sieht vor, daß die Behandlungskammern mindestens eine Gruppe von Vorbehandlungskammern und eine Gruppe von diesen zugeordneten Nachbehandlungskammern umfassen.

Besonders ökonomisch ist eine solche Ausführungsform der erfindungsgemäßen Vorrichtung, bei der die Förderstrecken der ersten Fördereinrichtung in einer ersten Förderebene und die Förderstrecken jeder zweiten Fördereinrichtung in jeweils einer zweiten Förderebene verlaufen. Bevorzugt ist jede zweite Förderebene vertikal und die erste Förderebene horizontal. Hierdurch ergibt sich eine mit einem Hochregallager vergleichbare Raumökonomie. Die erste Fördereinrichtung kann dabei auch Flurförderer, z. B. Elektrokarren oder Stapler umfassen.

Gemäß einer bei entsprechenden räumlichen Gegebenheiten ebenfalls vorteilhaften Ausführungsform der erfindungsgemäßen Vorrichtung verläuft jede zweite Förderebene parallel zur ersten Förderebene.

Zur möglichst optimalen Ausnutzung des gesamten Innenraums eines jeden Behandlungsraumes sind die Innenwände der Behandlungsräume möglichst dicht an die Förderbahn der zugehörigen zweiten Fördereinrichtungen angrenzend angeordnet.

Besonders bevorzugt enthält die erfindungsgemäße Vorrichtung eine Vielzahl von Kassetten, auf die die Lebensmittel einer Charge aufgelegt sind. Die erste und zweite Fördereinrichtung können dann die Chargen auf der jeweils zugehörigen Kassette befördern und auch den Übergabeeinrichtungen die Chargen jeweils auf dazugehörigen Kassetten übergeben. Die Handhabung der einzelnen Chargen wird hierdurch erheblich vereinfacht. Auch wird die Flexibilität der Produktion hierdurch wesentlich gefördert.

Um einen möglichst ungehinderten Luftzutritt zu allen Seiten der auf den Kassetten liegenden Lebensmittel zu gestatten, ist jede Kassette rostartig ausgebildet. Jede Kassette besitzt mindestens eine, bevorzugt jedoch mehrere Auflagen für Rohwürste. Diese können aus jeweils zwei plattenförmigen, V-förmig zueinander angeordneten oder im Querschnitt kreisbogenabschnittsförmigen, an den Rohwurstdurchmesser angepaßten Auflagenflächen bestehen; sie werden vorteilhafterweise jedoch von 2 oder mehr beabstandeten Stäben aus Stahl gebildet, auf denen die Wurst ruht.

Eine einfache und zuverlässige Koppelbarkeit von Kassetten und Fördereinrichtungen wird dadurch erreicht, daß jede Kassette einen Rahmen besitzt, mit dem sie in entsprechende Aufnahmen in der ersten und jeder zweiten Fördereinrichtung befestigbar, besonders bevorzugt einhängbar ist. Auch sind die Kassetten untereinander zu etwas größeren Einheiten stapelbar.

Gemäß einer besonders bevorzugten Ausführungsform der erfindungsgemäßen Vorrichtung ist jede zweite Fördereinrichtung nach Art eines Paternosters ausgebildet, dessen Aufnahmeeinrichtungen jeweils eine oder mehrere gestapelte Kassetten aufnehmen.

Die erfindungsgemäße Vorrichtung enthält weiterhin vorteilhafterweise eine Steuereinrichtung zur Steuerung der ersten und jeder zweiten Fördereinrichtung und den jeweils zugeordneten Übergabeeinrichtungen. Mittels dieser Steuereinrichtung kann die Beförderung jeder Charge durch die erste Fördereinrichtung und einer Übergabeeinrichtung zu einer zweiten Fördereinrichtung in einen Behandlungsraum, und nach einer vorgebbaren Behandlungsdauer die Übergabe der Charge wiederum mittels der Übergabeeinrichtung zurück zur ersten Fördereinrichtung bewirkt werden. Die Behandlungsdauer einer jeden Charge kann hierbei abhängig von der Beschaffenheit ihrer Rohwürste, insbesondere ihres Kalibers, einzeln vorgegeben werden. Durch den Einsatz einer solchen - vorteilhafterweise rechnergestützten - Steuerung wird ein hohes Maß an Produktivität und Flexibilität bei weitgehender Automatisierung erreicht.

Weitere vorteilhafte Ausführungsformen der Erfindung sind durch die Merkmale der Unteransprüche gekennzeichnet.

Nachfolgend wird ein Ausführungsbeispiel der Erfindung anhand der beiliegenden Zeichnungen näher erläutert. Es zeigen im einzelnen:
- Fig. 1: eine schematische Darstellung der aufeinanderfolgenden Verfahrensschritte bei der Herstellung von Rohwurst;
- Fig. 2: eine schematische Aufsicht auf den Produktionsbereich, in dem die Reifebehandlung von Rohwürsten stattfindet;
- Fig. 3: eine Vorderansicht des Innenraumes einer Behandlungskammer zur Reifebehandlung von Rohwürsten;
- Fig. 4: die Behandlungskammer aus Fig. 3 in Seitenansicht;
- Fig. 5: eine Seitenansicht einer Kassette zur Aufnahme von Rohwürsten;
- Fig. 6: eine Schnittdarstellung der in Fig. 5 dargestellten Kassette entlang der Linie B-B;
- Fig. 7: eine Ansicht der Stirnseite der in Fig. 5 dargestellten Kassette.

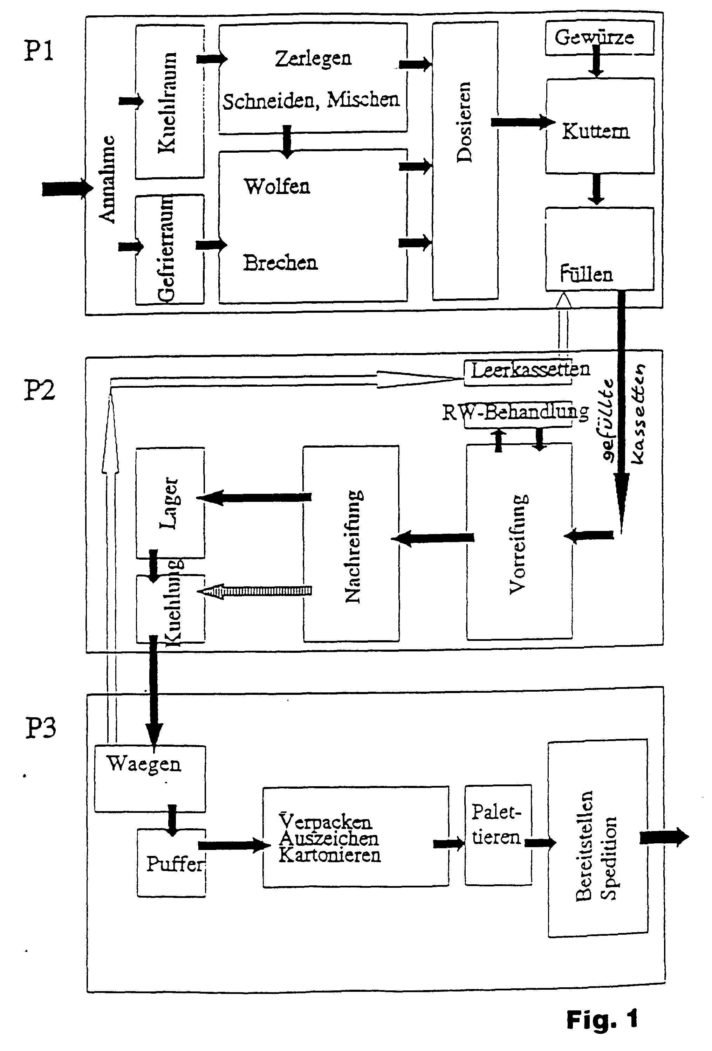

In Fig. 1 sind die Arbeitsabläufe zur Herstellung von Rohwürsten schematisch dargestellt. Die Herstellung von Rohwurst gliedert sich grob in die Bereiche Produktion P1, Reifung P2 sowie Verpackung/ Auszeichnung/Bereitstellung P3. Die vorliegende Erfindung bezieht sich ausschließlich auf den Bereich "Reifung" (P2). Die Schnittstelle zum Bereich P1 besteht in der Übernahme der vom Rohwurstfüller abgefüllten und auf Kassetten 30 abgelegten Rohwürste 1.

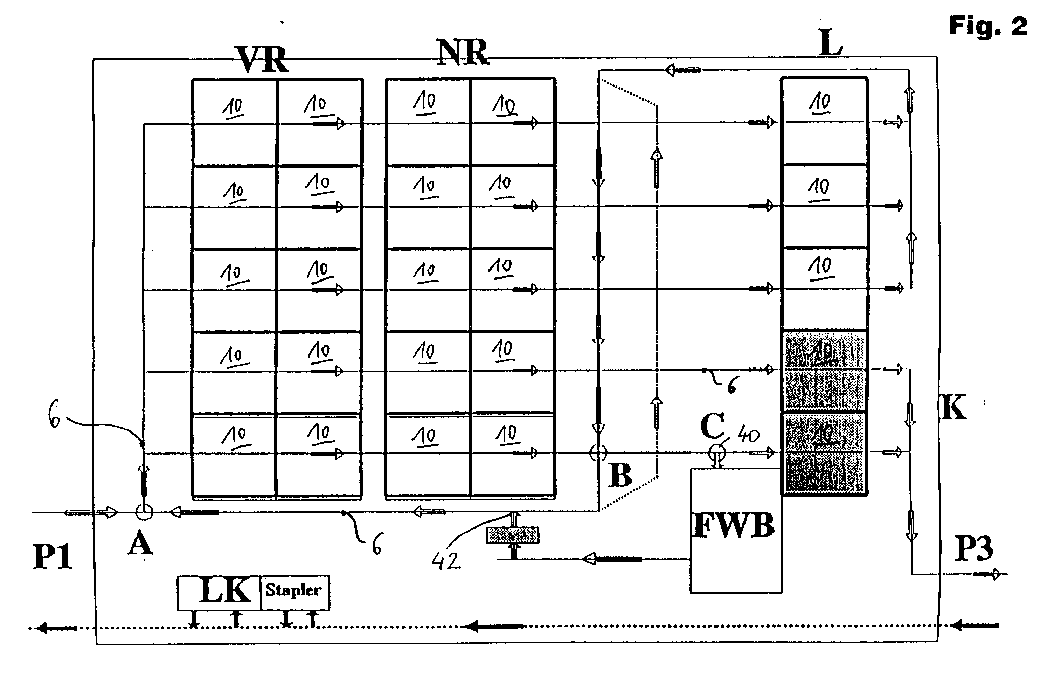

Fig. 2 zeigt eine schematische Darstellung des Produktionsbereiches P2 (Reifung) im Aufriß. Der Produktionsbereich P2 besitzt zehn mit "VR" bezeichnete Behandlungskammern 10, die zur Vorreifung verwendet werden, zehn mit "NR" bezeichnete Behandlungskammern 10 zur Nachreifung, sowie drei Behandlungskammern 10 für die Lagerung, die mit "L" bezeichnet sind und zwei mit "K" bezeichnete Behandlungskammern 10, in denen die Rohwurst 1 gekühlt wird.

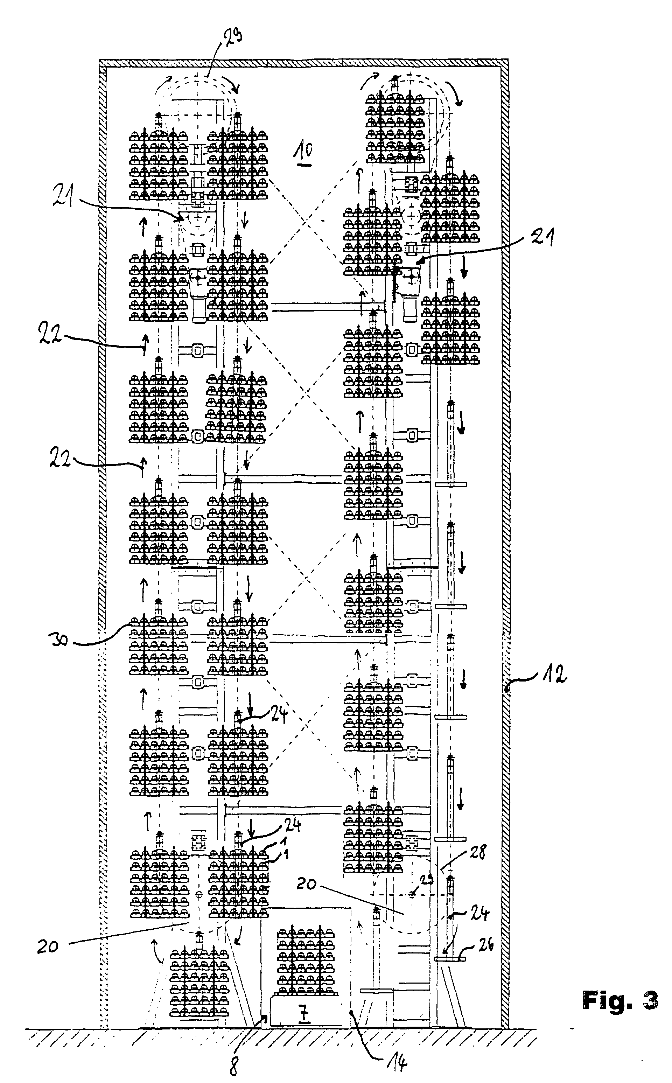

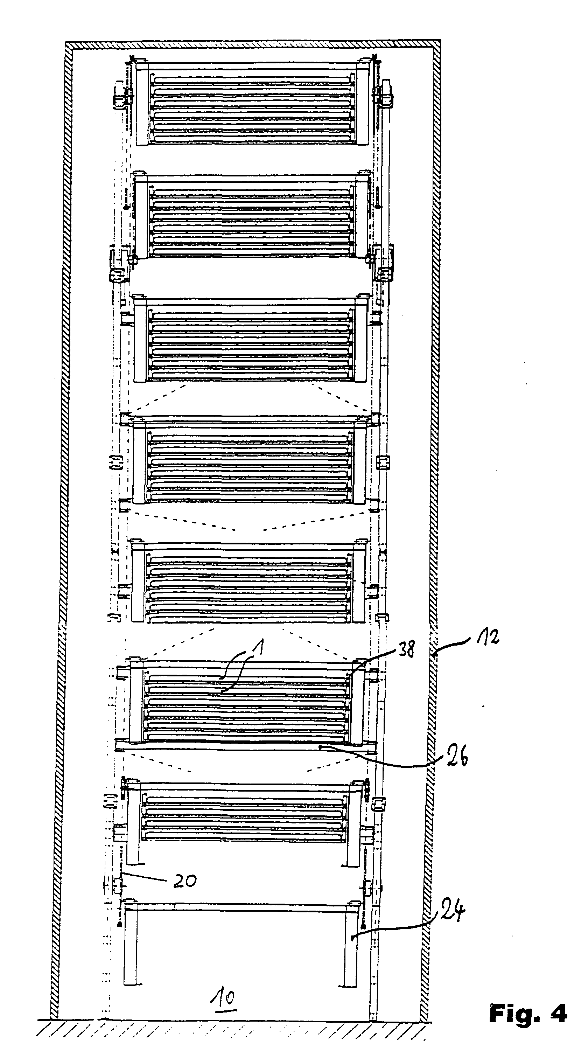

Die Rohwürste 1 werden nach dem Füllen auf Kassetten 30 abgelegt. Jede mit Rohwürsten befüllte Kassette 30 wird mittels einer ersten Fördereinrichtung 6 (Flurförderer 6), welche lediglich schematisch durch Linien und Pfeile angedeutet ist und beispielsweise ein Kettenförderer sein kann, zu einer mittels Steuerrechner (nicht näher dargestellt) bestimmten Behandlungskammer 10 transportiert. Eine Übergabeeinrichtung 8 (Fig. 3), die Hub- und Teleskopeinrichtungen (nicht dargestellt) enthalten kann, nimmt die Kassetten 30 von dem Flurförderer 6 ab und hängt sie in eine zweite Fördereinrichtung 20 (Paternoster 20) innerhalb der Behandlungskammern 10 ein. Die Paternoster 20 innerhalb der Behandlungskammern 10 werden anhand der Fig. 3 und 4 nachfolgend noch näher beschrieben. Innerhalb der Behandlungskammern 10 werden die Kassetten 30 vom Paternoster 20 langsam und gleichmäßig längs einer geschlossenen Förderbahn bewegt, wie nachfolgend noch beschrieben wird. Die Kassetten 30 werden nach vorbestimmbarer Zeitdauer analog vom Paternoster 20 wieder zum Flurförderer 6 übergeben.

Während der Vorreifung werden die Rohwürste 30 mit Flüssigkeit, beispielsweise Flüssigrauch und/oder Genußsäuren behandelt, um das Wachstum von Mikroorganismen zu behindern und/oder um ihren Geschmack zu beeinflussen. Für diese Behandlung mit Flüssigkeit ist mindestens eine Feuchtbehandlungsstation "FWB" vorgesehen, die im Ausführungsbeispiel gemäß Fig. 2 räumlich zwischen den Nachreifungs-Behandlungskammern "NR" und den der Lagerung dienenden Behandlungskammern "L" angeordnet ist; diese räumliche Anordnung ist aber für die Funktion ohne Bedeutung. Die Feuchtbehandlungsstation "FWB" ist ausweislich Fig. 2 an das Netz von Flurförderern 6 angeschlossen, von dem aus sie über eine Weiche 40 erreichbar ist. Das Zurückschleusen des in der Station FWB behandelten Gutes geschieht über eine Weiche 42. Durch diese Ankopplung an das Netz der Flurförderer 6 kann jede in einer beliebigen Behandlungskammer 10 befindliche und einer Feuchtebehandlung zuzuführende Kassette 30 zur Station FWB gefahren und anschließend in eine beliebige Behandlungskammer 10 zurückgebracht oder auch ohne weiteres in den Bereich P3 der Anlage zum Zwecke der Verpackung/Auszeichnung/Bereitstellung überführt werden.

Der tatsächliche Ablauf der Feuchtebehandlung in der Station FWB geschieht dadurch, daß die Rohwürste 1, nachdem die sie tragende Kassette die Weiche 40 passiert haben, von ihrer Kassette abgenommen, einzeln einem nicht dargestellten Förderer übergeben und von diesem Förderer in die Feuchtbehandlungsstation FWB eingefahren werden. Die Station FWB ist entweder mit Bädern für die Flüssigkeit und/oder mit einer ausreichenden Anzahl von Düsen versehen, aus denen eine Flüssigkeit auf die Oberfläche der vereinzelt durchlaufenden Rohwürste aufgebracht wird.

Bei der Flüssigkeit kann es sich um Flüssigrauch handeln oder aber um eine Genußsäure, beispielsweise Milch- oder Weinsäure handeln oder aber auch für Waschzwecke um Wasser. Weiterhin ist in der Station FWB ein Bereich zum Trocknen der einzelnen passierenden Rohwürste vorgesehen, beispielsweise mit Wärme und/oder Druckluft. Nach dem Passieren der Behandlungsbereiche innerhalb der Feuchtbehandlungsstation FWB werden die einzelnen Rohwürste 30 wieder auf Kassetten abgelegt und in der beschriebenen Weise und den erwähnten Zielmöglichkeiten über die Weiche 42 abgefördert. Sofern die Anlage nicht mit einzelnen Kassetten, sondern mit zu Gruppen von einigen Kassetten zusammengefaßten Chargen betrieben wird oder falls ein Mischbetrieb von einzelnen Kassetten und gruppierten Kassetten vorliegt, dann ist im Bereich der Feuchtbehandlungsstation FWB vorgesehen, daß zu Gruppen zusammengefaßte Kassetten zunächst getrennt, die Würste dann einzeln abgenommen, in der Station FWB behandelt, anschließend auf ihren Kassetten wieder abgelegt und letztere vor dem Weitertransport zu Gruppen zusammengefaßt werden bzw. werden können.

Es ist für den Fachmann einleuchtend, daß die beschriebene Behandlung der Rohwürste in der Feuchtbehandlungsstation FWB besonders vorteilhaft ist, weil das Durchschleusen einzelner Würste nicht nur eine optimale Beeinflussung der Würste ermöglicht, sondern weil die Behandlung in einer oder einigen äußerst kleinen Kammern innerhalb der Station FWB ohne Qualitätsminderung stattfinden kann und die sonst üblichen Reinigungsprobleme derartiger Behandlungsstationen auf ein Minimum reduziert werden. Der apparative Aufwand für das Vereinzeln der Rohwürste und die Übergabe zwischen den verschiedenen Fördermitteln ist demgegenüber vernachlässigbar.

Nach Abschluß der Vorreifung werden die Rohwürste 10 auf den Kassetten 30 aus der entsprechenden Vorreifungs-Behandlungskammer 10 entnommen, mittels des Flurförderers 6 zu einer durch die Steuereinheit vorbestimmten Nachreifungs-Behandlungskammer 10 transportiert und auch hier dem jeweiligen Paternoster 20 innerhalb der Behandlungskammer 10 übergeben. Die Nachreifungs-Behandlungskammern 10 ("NR") unterscheiden sich von den Vorreifungs-Behandlungskammern 10 ("VR") lediglich durch Innentemperatur und -luftfeuchtigkeit.

Nach Abschluß der Nachreifung werden die Kassetten 30 mit den Rohwürsten 1 durch den Flurförderer 6 zu einer der Behandlungskammern 10 "K" transportiert, in denen die Rohwürste auf eine Temperatur von ca. - 2°C gekühlt werden, um sie besser schneidbar zu machen. Die Behandlungskammern 10 "L" werden als Puffer verwendet, wenn die zeitlichen Abläufe der Rohwurstbehandlung eine unmittelbare Weiterverarbeitung ausnahmsweise nicht gestatten. Nach Kühlung der Rohwürste 1 werden sie auf ihren Kassetten 30 dem nachgeordneten Verarbeitungsbereich P3 zugeführt. Die leeren Kassetten 30 werden nach einer Reinigung und Desinfektion im Kassettenlager LK zwischengelagert oder gleich zum Wurstfüller im Bereich P1 zurücktransportiert.

Die Fig. 3 und 4 zeigen zwei Ansichten der Innenräume der Behandlungskammern 10. Innerhalb der als turmartiges Gebäude mit Wänden 12 und Eingangstor 14 ausgebildeten Behandlungskammern 10 befinden sich zwei nebeneinander angeordnete Paternoster 20. Die Paternoster 20 bewegen die Kassetten 30 im Ausführungsbeispiel stapelweise mit jeweils sechs aufeinander gestapelten Kassetten 30, auf denen wiederum jeweils sechs Rohwürste 1 lagern, längs einer geschlossenen Förderbahn, welche durch Pfeile 22 angedeutet ist. Selbstverständlich werden die Kassetten 30 an den oberen und unteren Wendepunkten der Förderbahn 22 nicht gestürzt, sondern die Bewegungsbahn - wie bei einem Paternoster üblich - unter Beibehaltung der Oben/Unten-Ausrichtung umgekehrt. Die Rohwürste auf den im Ausführungsbeispiel sechs Kassetten 30 bilden hier die Charge, die als kleinste Einheit separat gehandhabt wird. Nicht dargestellt ist, daß man Vorrichtungen vorsehen kann, mit denen auch während der Behandlung ein Separieren einzelner Kassetten des Stapels möglich ist.

Jeder Paternoster 20 wird von einer schematisch angedeuteten Antriebseinheit 21 mit einem Elektromotor angetrieben. Die Antriebseinheit 21 treibt ein schematisch angedeutetes Antriebsrad 29 an, das beispielsweise eine zu einem weiteren, im vertikalen Abstand angeordneten Zahnrad 29 gespannte Förderkette 28 antreibt. An der Förderkette sind eine Vielzahl von Trägern 24 um horizontale Schwenkachsen schwenkbar gelagert. An der Unterseite jedes Trägers 24 ist eine Aufnahme 26 vorgesehen, auf denen eine oder mehrere übereinander gestapelte Kassetten 30 befestigt werden können.

Die Übergabeeinrichtung 8 zwischen Flurförderer 6 und dem Paternoster 20 enthält in dem in Fig. 3 dargestellten Ausführungsbeispiel einen Flurförderer 7, auf dem übereinander gestapelte, mit Rohwurst 1 befüllte Kassetten 30 übergeben werden können.

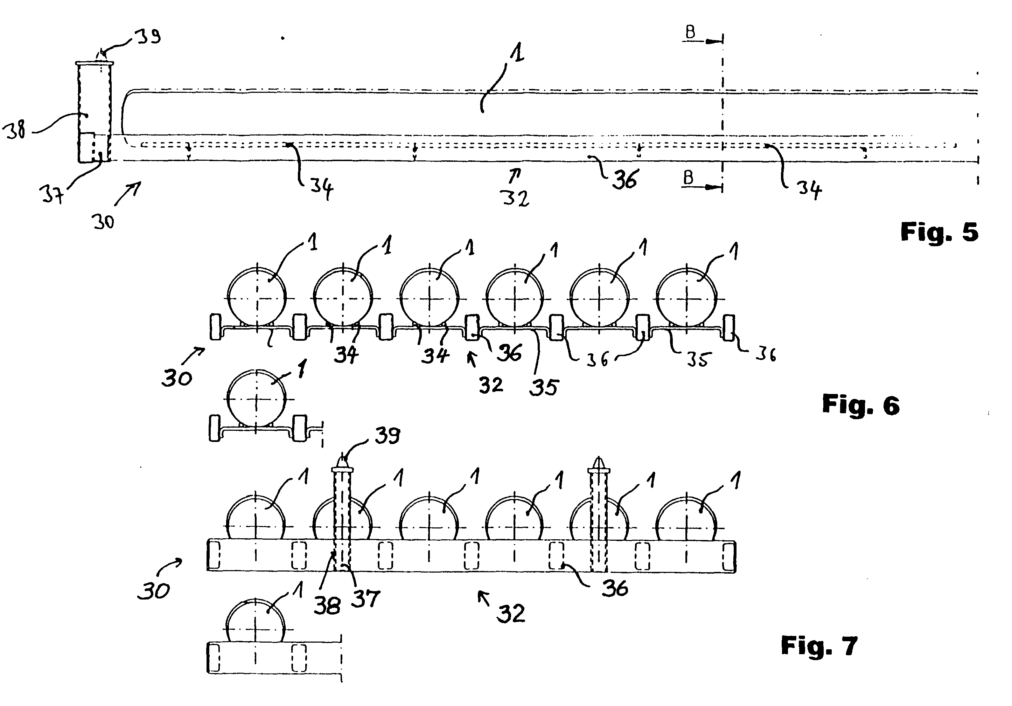

Die Fig. 5, 6 und 7 zeigen Darstellungen einer Kassette 30 für sechs Rohwürste 1. Die Kassette 30 besitzt einen insgesamt mit 32 bezeichneten Rahmen, welcher aus sieben parallel beabstandeten Rohren 36 mit rechteckigem Querschnitt, sowie quer zwischen den Rohren 36 befestigten U-förmigen Brücken 35 besteht. Zwischen je zwei Rohren 36 sind auf den Brücken 35 jeweils zwei Auflagen 34 vorgesehen, die in der dargestellten Ausführungsform als parallel zu den Rohren 36 verlaufende, und zueinander parallel beabstandete Rundstäbe ausgebildet sind.

An beiden Stirnseiten der Kassetten 30 sind mit Vorteil jeweils zwei Koppelelemente 38 befestigt, durch die mehrere Kassetten 30 übereinander stapelbar 8sind und ausreichend Halt gegen seitliches Abgleiten gewährleisten. Hierzu besitzt jedes Koppelelement 38 an seinem unteren Ende eine Ausnehmung 37, die mit einer im dargestellten Ausführungsbeispiel konusförmigen Anformung 39 am oberen Ende des Koppelelementes 38 korrespondiert, so daß beim Aufsetzen einer Kassette 30 auf eine andere Kassette 30 die Anformungen 39 der Koppelelemente 38 in die entsprechenden Ausnehmungen 37 der oben aufgesetzten Kassette 30 eingreifen.

## Patentansprüche

1. Verfahren zur Reifebehandlung von Chargen, insbesondere aus einer oder mehreren Rohwürsten (1), bei dem die Chargen in eine Behandlungskammer (10) gegeben und nach einer vorgebbaren Behandlungsdauer aus der Behandlungskammer wieder entfernt werden,
dadurch gekennzeichnet, daß die Chargen innerhalb der Behandlungskammer (10) während vorgebbarer Zeitabschnitte der Behandlungsdauer kontinuierlich längs einer geschlossenen Förderbahn (22) umlaufend bewegt werden.

2. Verfahren nach Anspruch 1,
dadurch gekennzeichnet, daß die Chargen während der gesamten Behandlungsdauer kontinuierlich längs der geschlossenen Förderbahn (22) bewegt werden.

3. Verfahren nach einem der Ansprüche 1 oder 2,
dadurch gekennzeichnet, daß die Chargen in der Behandlungskammer (10) mit konstanter Geschwindigkeit bewegt werden.

4. Verfahren nach einem der vorstehenden Ansprüche,
bei dem die Chargen mit einer ersten Fördereinrichtung (6) zu der Behandlungskammer gefördert werden,
dadurch gekennzeichnet, daß die Chargen an der Behandlungskammer (10) von einer Übergabeeinrichtung (8) von der ersten Fördereinrichtung (6) abgenommen und anschließend einer zweiten Fördereinrichtung (20) in der Behandlungskammer übergeben werden.

5. Verfahren nach einem der vorstehenden Ansprüche,
dadurch gekennzeichnet, daß die Förderbahn (22), längs derer die Chargen innerhalb der Behandlungskammer (10) bewegt werden, in einer vertikalen Ebene liegt.

6. Verfahren nach einem der vorstehenden Ansprüche,
dadurch gekennzeichnet, daß die zu behandelnden Lebensmittel, insbesondere Rohwürste, einer Charge auf rostartige Kassetten (30) gelegt werden und die Kassetten (30) während der Behandlungsdauer längs der geschlossenen Förderbahn (22) in der Behandlungskammer (10) bewegt werden.

7. Verfahren nach Anspruch 6,
dadurch gekennzeichnet, daß die Rohwürste (1) o. dgl. einer Charge während der Behandlungsdauer auf der Kassette (30) mindestens einmal gewendet werden.

8. Verfahren nach mindestens einem der vorstehenden Ansprüche,
dadurch gekennzeichnet, daß zu behandelnde Chargen aus jeweils mehreren Lebensmitteln, insbesondere Rohwürsten (1) o. dgl. vereinzelt und sequentiell einem Förderer übergeben werden, der die vereinzelten Lebensmittel nacheinander durch eine Feuchtbehandlungsstation führt und daß die vereinzelten Lebensmittel nach der Feuchtbehandlung wieder zu Chargen zusammengefaßt werden.

9. Vorrichtung zur Reifebehandlung von Chargen, insbesondere aus einer oder mehreren Rohwürsten (1), mit mindestens einer Behandlungskammer (10) und einer ersten Fördereinrichtung (6) zur Beförderung der Chargen zu der oder zu einer vorgebbaren Behandlungskammmer (10),
insbesondere zur Ausführung des Verfahrens nach einem der vorstehenden Ansprüche,
gekennzeichnet durch mindestens eine zweite Fördereinrichtung (20) zur umlaufenden Beförderung der Chargen längs einer geschlossenen Förderbahn (22) innerhalb einer Behandlungskammer (10) und eine Übergabeeinrichtung (8) zwischen jeder zweiten Fördereinrichtung (20) und der ersten Fördereinrichtung (6), mittels derer die Chargen von der ersten Fördereinrichtung (6) zur zugehörigen zweiten Fördereinrichtung (20) oder zurück übergeben werden können.

10. Vorrichtung nach Anspruch 9,
dadurch gekennzeichnet, daß eine Vielzahl von Behandlungskammern (10) vorgesehen sind und innerhalb jeder Behandlungskammer (10) mindestens eine zweite Fördereinrichtung (20) angeordnet ist.

11. Vorrichtung nach Anspruch 10,
dadurch gekennzeichnet, daß die Behandlungskammern (10) mindestens eine Gruppe von Vorbehandlungskammern (VR) und eine Gruppe von diesen zugeordneten Nachbehandlungskammern (NR) umfassen.

12. Vorrichtung mindestens nach Anspruch 9,
dadurch gekennzeichnet, daß der Gesamtheit der Behandlungskammern (10) mindestens eine Feuchtbehandlungskammer (FWB) zugeordnet und betriebsmäßig an die erste Fördereinrichtung (6) mittels Weichen (40, 42) angeschlossen ist.

13. Vorrichtung nach Anspruch 12,
dadurch gekennzeichnet, daß die Feuchtbehandlungskammer (FWB) eine Fördereinrichtung für vereinzelte Lebensmittel, insbesondere Rohwürste (1) o. dgl. aufweist.

14. Vorrichtung nach Anspruch 12 oder 13,
dadurch gekennzeichnet, daß die Feuchtbehandlungskammer (FWB) mit Flüssigkeitsbecken und/oder Düsen zum Übergeben von Flüssigkeit auf passierende Lebensmittel ausgestattet ist.

15. Vorrichtung nach einem der vorstehenden Ansprüche,
dadurch gekennzeichnet, daß die Förderstrecken der ersten Fördereinrichtung (6) in einer ersten Förderebene und die Förderstrecken (22) jeder zweiten Fördereinrichtung (20) in jeweils einer zweiten Förderebene verlaufen.

16. Vorrichtung nach Anspruch 15,
dadurch gekennzeichnet, daß jede zweite Förderebene vertikal und die erste Förderebene horizontal verläuft.

17. Vorrichtung nach Anspruch 15,
dadurch gekennzeichnet, daß jede zweite Förderebene parallel zur ersten Förderebene verläuft.

18. Vorrichtung nach einem der vorstehenden Ansprüche,
dadurch gekennzeichnet, daß die Innenwände jedes Behandlungsraumes (10) dicht an die Förderbahn (22) der zugehörigen zweiten Fördereinrichtungen (20) angrenzend angeordnet sind.

19. Vorrichtung nach einem der vorstehenden Ansprüche,
dadurch gekennzeichnet, daß jede Charge auf einer Kassette (30) vorliegt, die erste und jede zweite Fördereinrichtung (6; 20) die Chargen auf der zugehörigen Kassette (30) befördern und die Übergabeeinrichtungen (8) die Chargen auf der zugehörigen Kassette (30) übergeben.

20. Vorrichtung nach Anspruch 19,
dadurch gekennzeichnet, daß jede Kassette (30) rostartig ausgebildet ist.

21. Vorrichtung nach einem der Ansprüche 19 oder 20,
dadurch gekennzeichnet, daß jede Kassette (30) einen Rahmen (32) besitzt, mit dem sie in entsprechende Aufnahmen (26) an der ersten und jeder zweiten Fördereinrichtung (6; 20) befestigbar, insbesondere einhängbar ist.

22. Vorrichtung nach einem der Ansprüche 19 bis 21,
dadurch gekennzeichnet, daß jede Kassette (30) eine oder mehrere Auflagen (34) für Rohwürste (1) o. dgl. besitzt, die aus jeweils mindestens zwei beabstandeten Rundstäben bestehen, auf denen jeweils eine Rohwurst o. dgl. ablegbar ist.

23. Vorrichtung nach einem der Ansprüche 19 bis 22,
dadurch gekennzeichnet, daß jede zweite Fördereinrichtung (20) nach Art eines Paternosters ausgebildet ist und Aufnahmeeinrichtungen (26) für die Kassetten (30) aufweist.

24. Vorrichtung nach einem der vorstehenden Ansprüche 9 bis 22,
dadurch gekennzeichnet, daß die Förderstrecke (22) mindestens einer zweiten Fördereinrichtung (20) einen spiralförmigen Abschnitt enthält.

25. Vorrichtung nach einem der vorstehenden Ansprüche 9 bis 24, gekennzeichnet durch eine Steuereinrichtung zur Steuerung der ersten und jeder zweiten Fördereinrichtung (6; 20) und den jeweils zugeordneten Übergabeeinrichtungen (8), die mittels der ersten Fördereinrichtung (6) und einer Übergabeeinrichtung (8) die Beförderung jeder Charge zu einer zweiten Fördereinrichtung (20) in einem Behandlungsraum (10) und nach einer vorgebbaren Behandlungsdauer die Übergabe der Charge mittels der Übergabeeinrichtung (8) zurück zur ersten Fördereinrichtung (6) bewirkt.

26. Vorrichtung nach Anspruch 25,
dadurch gekennzeichnet, daß die Behandlungsdauer einer jeden Charge abhängig von der Beschaffenheit ihrer Rohwürste (1), insbesondere ihres Kalibers, einzeln vorgebbar ist.

27. Vorrichtung nach einem der Ansprüche 9 bis 26,
dadurch gekennzeichnet, daß in jeder Behandlungskammer (10) mindestens zwei zweite Fördereinrichtungen (20) angeordnet sind.

28. Vorrichtung nach einem der Ansprüche 9 bis 27,
dadurch gekennzeichnet, daß mindestens eine Behandlungskammer (10) an gegenüberliegenden Seiten jeweils eine Übergabeeinrichtung (8) besitzt.

29. Vorrichtung nach Anspruch 28,
dadurch gekennzeichnet, daß mehrere Behandlungskammern (10) mit Übergabeeinrichtungen (8) so zueinander angeordnet sind, daß sie mit jeweils einer Übergabeeinrichtung (8) aneinander angrenzen.

## Claims

1. A process for maturing batches of in particular one or more types of uncooked sausage (1), in which the batches are placed in a treatment chamber (10) and are removed from the treatment chamber again after a predeterminable treatment time, characterised in that, within the treatment chamber (10), the batches are moved continuously along a closed conveyor path (22) in circulating manner during predeterminable periods of the treatment time.

2. A process according to Claim 1, characterised in that the batches are moved continuously along the closed conveyor path (22) during the entire treatment time.

3. A process according to one of Claims 1 and 2, characterised in that the batches are moved at a constant speed in the treatment chamber (10).

4. A process according to one of the preceding claims, in which the batches are conveyed to the treatment chamber by means of a first conveyor device (6), characterised in that, at the treatment chamber (10), the batches are removed from the first conveyor device (6) by means of a transfer device (8) and are then transferred to a second conveyor device (20) in the treatment chamber.

5. A process according to one of the preceding claims, characterised in that the conveyor path (22), along which the batches are moved within the treatment chamber (10), lies in a vertical plane.

6. A process according to one of the preceding claims, characterised in that the foodstuffs, in particular uncooked sausages, of a batch which are to be treated are placed on grate-like racks (30), and the racks (30) are moved along the closed conveyor path (22) in the treatment chamber (10) during the treatment time.

7. A process according to Claim 6, characterised in that the uncooked sausages (1) or the like of a batch are turned at least once during the treatment time on the rack (30).

8. A process according to at least one of the preceding claims, characterised in that batches to be treated, which comprise in each case a plurality of foodstuffs, in particular uncooked sausages (1) or the like, are transferred in separated and sequential manner to a conveyor, which guides the separated foodstuffs in succession through a moistening station, and in that the separated foodstuffs are brought together again to form batches after the moistening treatment.

9. A device for maturing batches of in particular one or more types of uncooked sausage (1), having at least one treatment chamber (10) and a first conveyor device (6) for conveying the batches to the treatment chamber (10) or to a predeterminable treatment chamber, in particular for carrying out the process according to one of the preceding claims, characterised by at least one second conveyor device (20) for conveying the batches in circulating manner along a closed conveyor path (22) within a treatment chamber (10), and a transfer device (8) between each second conveyor device (20) and the first conveyor device (6), by means of which the batches can be transferred from the first conveyor device (6) to the associated second conveyor device (20) or vice versa.

10. A device according to Claim 9, characterised in that a plurality of treatment chambers (10) are provided, and at least one second conveyor device (20) is arranged within each treatment chamber (10).

11. A device according to Claim 10, characterised in that the treatment chambers (10) contain at least one group of pretreatment chambers (VR) and one group of post-treatment chambers (NR) associated therewith.

12. A device at least according to Claim 9, characterised in that at least one moistening chamber (FWB) is associated with all the treatment chambers (10) and is operatively connected to the first conveyor device (6) by means of distributing guides (40, 42).

13. A device according to Claim 12, characterised in that the moistening chamber (FWB) has a conveyor device for separated foodstuffs, in particular uncooked sausages (1) or the like.

14. A device according to Claim 12 or 13, characterised in that the moistening chamber (FWB) is equipped with liquid-containing basins and/or nozzles for transferring liquid to passing foodstuffs.

15. A device according to one of the preceding claims, characterised in that the conveyor sections of the first conveyor device (6) extend in a first conveyor plane, and the conveyor sections (22) of each second conveyor device (20) each extend in a second conveyor plane.

16. A device according to Claim 15, characterised in that each second conveyor plane extends vertically and the first conveyor plane extends horizontally.

17. A device according to Claim 15, characterised in that each second conveyor plane extends parallel to the first conveyor plane.

18. A device according to one of the preceding claims, characterised in that the inside walls of each treatment room (10) are arranged closely adjacent to the conveyor path (22) of the associated second conveyor devices (20).

19. A device according to one of the preceding claims, characterised in that each batch is present on a rack (30), the first and each second conveyor device (6; 20) convey the batches on the associated rack (30), and the transfer devices (8) transfer the batches on the associated rack (30).

20. A device according to Claim 19, characterised in that each rack (30) is of a grate-like construction.

21. A device according to one of Claims 19 and 20, characterised in that each rack (30) has a frame (32), by means of which it may be mounted, in particular suspended, in corresponding receiving means (26) on the first and each second conveyor device (6; 20).

22. A device according to one of Claims 19 to 21, characterised in that each rack (30) has one or more supporting areas (34) for uncooked sausages (1) or the like, which comprise in each case at least two mutually spaced round rods on which in each case an uncooked sausage or the like may be deposited.

23. A device according to one of Claims 19 to 22, characterised in that each second conveyor device (20) is constructed in the manner of a paternoster and has receiving means (26) for the racks (30).

24. A device according to one of the preceding Claims 9 to 22, characterised in that the conveyor section (22) of at least one second conveyor device (20) contains a helical portion.

25. A device according to one of the preceding Claims 9 to 24, characterised by a control means for controlling the first and each second conveyor device (6; 20) and the transfer devices (8) associated in each case therewith, which control means effects the conveyance of each batch to a second conveyor device (20) in a treatment room (10) by means of the first conveyor device (6) and a transfer device (8), and, after a predeterminable treatment time, the transfer of the batch back to the first conveyor device (6) by means of the transfer device (8).

26. A device according to Claim 25, characterised in that the treatment time of each batch may be determined separately, depending on the composition, and in particular the calibre, of the uncooked sausages (1) therein.

27. A device according to one of Claims 9 to 26, characterised in that at least two second conveyor devices (20) are arranged in each treatment chamber (10).

28. A device according to one of Claims 9 to 27, characterised in that, at opposite sides of at least one treatment chamber (10), there is in each case a transfer device (8).

29. A device according to Claim 28, characterised in that a plurality of treatment chambers (10) having transfer devices (8) are arranged with respect to one another such that they adjoin one another in each case by means of a transfer device (8).

## Revendications

1. Procédé de maturation de lots contenant en particulier une ou plusieurs charcuteries crues (1), procédé dans lequel les lots sont introduits dans une chambre de traitement (10) et sont ensuite évacués hors de la chambre de traitement après une durée de traitement pouvant être prédéfinie, caractérisé en ce que, à l'intérieur de la chambre de traitement (10), les lots sont transportés en boucle, pendant des intervalles de temps pouvant être prédéfinis pour la durée du traitement, en continu le long d'une voie de transport (22) fermée.

2. Procédé selon la revendication 1, caractérisé en ce que les lots sont transportés pendant toute la durée du traitement en continu le long de la voie de transport (22) fermée.

3. Procédé selon la revendication 1 ou 2, caractérisé en ce que les lots sont transportés à une vitesse constante dans la chambre de traitement (10).

4. Procédé selon l'une quelconque des revendications précédentes, dans lequel les lots sont transportés avec un premier dispositif de transport (6) vers la chambre de traitement, caractérisé en ce que, au niveau de la chambre de traitement (10), les lots sont évacués du premier dispositif de transport (6) au moyen d'un dispositif de transfert (8) et sont ensuite transférés sur un deuxième dispositif de transport (20) monté dans la chambre de traitement.

5. Procédé selon l'une quelconque des revendications précédentes, caractérisé en ce que la voie de transport (22), le long de laquelle sont transportés les lots à l'intérieur de la chambre de traitement (10), est située dans un plan vertical.

6. Procédé selon l'une quelconque des revendications précédentes, caractérisé en ce que les denrées alimentaires à traiter contenues dans un lot, en particulier les charcuteries crues, sont déposées sur des caissettes (30) en forme de grille, et les caissettes (30) sont transportées pendant la durée du traitement le long de la voie de transport (22) fermée, montée dans la chambre de traitement (10).

7. Procédé selon la revendication 6, caractérisé en ce que les charcuteries crues (1) ou denrées similaires contenues dans un lot sont tournées au moins une fois sur la caissette (30) pendant la durée du traitement.

8. Procédé selon l'une quelconque des revendications précédentes, caractérisé en ce que des lots à traiter contenant chacun plusieurs denrées alimentaires, en particulier des charcuteries crues (1) ou des denrées similaires, sont détaillés par unités et sont transférés par séquence vers un dispositif de transport, par lequel les denrées alimentaires individuelles sont acheminées les unes derrière les autres à travers un poste de traitement par voie humide et en ce que, à la fin du traitement par voie humide, les denrées alimentaires individuelles sont à nouveau regroupées pour former des lots.

9. Dispositif de maturation de lots contenant en particulier une ou plusieurs charcuteries crues (1), comprenant au moins une chambre de traitement (10) et un premier dispositif de transport (6) destiné à transporter les lots vers la ou vers une chambre de traitement (10) pouvant être prédéfinie, lequel dispositif est conçu en particulier pour la mise en oeuvre du procédé selon l'une quelconque des revendications précédentes, caractérisé par au moins un deuxième dispositif de transport (20) destiné à transporter en boucle les lots le long d'une voie de transport (22) fermée, montée à l'intérieur de la chambre de traitement (10), et par un dispositif de transfert (8) situé entre chaque deuxième dispositif de transport (20) et le premier dispositif de transport (6), au moyen duquel les lots peuvent être transférés du premier dispositif de transport (6) vers le deuxième dispositif de transport (20) correspondant ou retournés en sens inverse.

10. Dispositif selon la revendication 9, caractérisé en ce qu'il est prévu une pluralité de chambres de traitement (10) et au moins un deuxième dispositif de transport (20) est monté à l'intérieur de chaque chambre de traitement (10).

11. Dispositif selon la revendication 10, caractérisé en ce que les chambres de traitement (10) sont au moins formées par un groupe de chambres de traitement préalable (VR) et par un groupe de chambres de traitement ultérieur (NR) associées à celles-ci.

12. Dispositif au moins selon la revendication 9, caractérisé en ce qu'au moins une chambre de traitement par voie humide (FWB) est associée à l'ensemble des chambres de traitement (10) et est raccordée en cours de service au premier dispositif de transport (6) par l'intermédiaire d'aiguillages (40, 42).

13. Dispositif selon la revendication 12, caractérisé en ce que la chambre de traitement par voie humide (FWB) comporte un dispositif de transport pour des denrées alimentaires individuelles, en particulier des charcuteries crues ou des denrées similaires.

14. Dispositif selon la revendication 12 ou 13, caractérisé en ce que la chambre de traitement par voie humide (FWB) est équipée de bacs contenant un liquide et/ou de buses destinées à projeter le liquide sur les denrées alimentaires transportées le long de celles-ci.

15. Dispositif selon l'une quelconque des revendications précédentes, caractérisé en ce que les voies de transport du premier dispositif de transport (6) sont disposées dans un premier plan de transport et les voies de transport (22) de chaque deuxième dispositif de transport (20) sont disposées chacune dans un deuxième plan de transport.

16. Dispositif selon la revendication 15, caractérisé en ce que chaque deuxième plan de transport est disposé verticalement et le premier plan de transport est disposé horizontalement.

17. Dispositif selon la revendication 15, caractérisé en ce que chaque deuxième plan de transport est disposé parallèlement au premier plan de transport.

18. Dispositif selon l'une quelconque des revendications précédentes, caractérisé en ce que les parois intérieures de chaque chambre de traitement (10) sont disposées étroitement contre la voie de transport (22) des deuxièmes dispositifs de transport (20) correspondants.

19. Dispositif selon l'une quelconque des revendications précédentes, caractérisé en ce que chaque lot est posé sur une caissette (30), le premier et chaque deuxième dispositif de transport (6 ; 20) transportent les lots posés sur les caissettes (30) correspondantes et les dispositifs de transfert (8) transfèrent les lots posés sur les caissettes (30) correspondantes.

20. Dispositif selon la revendication 19, caractérisé en ce que chaque caissette (30) est conçue en forme de grille.

21. Dispositif selon la revendication 19 ou 20, caractérisé en ce que chaque caissette (30) est munie d'un cadre (32), par lequel ladite caissette peut être fixée, en particulier suspendue dans des dispositifs de réception (26) appropriés, montés contre le premier et chaque deuxième dispositif de transport (6 ; 20).

22. Dispositif selon l'une quelconque des revendications 19 à 21, caractérisé en ce que chaque caissette (30) comporte un ou plusieurs supports (34) destinés à recevoir les charcuteries crues (1) ou denrées similaires, lesquels sont formés chacun par au moins deux barres rondes espacées, sur lesquelles peuvent être déposés respectivement une charcuterie crue ou une denrée similaire.

23. Dispositif selon l'une quelconque des revendications 19 à 22, caractérisé en ce que chaque deuxième dispositif de transport (20) est conçu à la manière d'un paternoster et est muni de dispositifs de réception (26) réservés aux caissettes (30).

24. Dispositif selon l'une quelconque des revendications précédentes 9 à 22, caractérisé en ce que la voie de transport (22) d'au moins un deuxième dispositif de transport (20) comporte une section hélicoïdale.

25. Dispositif selon l'une quelconque des revendications précédentes 9 à 24, caractérisé par un dispositif de commande destiné à commander le premier et chaque deuxième dispositif de transport (6 ; 20) et les dispositifs de transfert (8) associés à chacun de ceux-ci, lequel dispositif de commande actionne, par l'intermédiaire du premier dispositif de transport (6) et d'un dispositif de transfert (8), le transport de chaque lot vers un deuxième dispositif de transport (20), monté dans une chambre de traitement (10), et, après une durée de traitement pouvant être prédéfinie, actionne le transfert du lot par l'intermédiaire du dispositif de transfert (8) pour le retourner vers le premier dispositif de transport (6).

26. Dispositif selon la revendication 25, caractérisé en ce que la durée de traitement de chaque lot peut être prédéfinie individuellement en fonction de la nature, en particulier en fonction du calibre des charcuteries crues (1) contenues dans un lot.

27. Dispositif selon l'une quelconque des revendications 9 à 26, caractérisé en ce qu'au moins deux deuxièmes dispositifs de transport (20) sont montés dans chaque chambre de traitement (10).

28. Dispositif selon l'une quelconque des revendications 9 à 27, caractérisé en ce que chaque côté face à face d'au moins une chambre de traitement (10) est muni d'un dispositif de transfert (8).

29. Dispositif selon la revendication 28, caractérisé en ce que plusieurs chambres de traitement (10) munies de dispositifs de transfert (8) soient disposées les unes par rapport aux autres de telle sorte qu'elles sont juxtaposées respectivement par les côtés munis d'un dispositif de transfert (8).
